**Europäisches Patentamt**

**European Patent Office**

**Office européen des brevets**

(19)

(11) Veröffentlichungsnummer: **0 022 195**
**B1**

(12) **EUROPÄISCHE PATENTSCHRIFT**

(45) Veröffentlichungstag der Patentschrift:
24.09.86

(21) Anmeldenummer: **80103388.7**

(22) Anmeldetag: **18.06.80**

(51) Int. Cl.⁴: **C 03 C 3/074,** C 03 C 4/20,
**B 41 J 3/04**

(54) **Zusammensetzung von Glasmassen zum Einbetten einer Anzahl aus Glas bestehender Düsen in einer Mehrfachdüsenanordnung von Tintenstrahldruckern.**

(30) Priorität: **28.06.79 SA 53147**

(43) Veröffentlichungstag der Anmeldung:
**14.01.81 Patentblatt 81/2**

(45) Bekanntmachung des Hinweises auf die Patenterteilung:
**24.09.86 Patentblatt 86/39**

(84) Benannte Vertragsstaaten:
**DE FR GB**

(56) Entgegenhaltungen:
DE-A-2 262 073
FR-A-941 885
FR-A-2 364 866
GB-A-908 198
GB-A-1 181 840
US-A-2 210 489
US-A-2 381 925
US-A-2 577 627
US-A-3 407 091
US-A-3 653 933
US-A-3 746 556
US-A-3 801 336
US-A-4 019 886
US-A-4 122 460

GLASTECHNISCHE BERICHTE, Band 37, Heft 3,
März 1964, Verlag der deutschen glastechnischen
Gesellschaft FRANKFURT (BRD) KENTARO

(73) Patentinhaber: **International Business Machines Corporation, Old Orchard Road, Armonk, N.Y. 10504 (US)**

(72) Erfinder: **Powell, Jimmie Lee, 33 Tor Road, Wappingers Falls New York 12590 (US)**
Erfinder: **Tummala, Rao Ramamahara, 20 Split Tree Drive, Wappingers Falls New York 12590 (US)**

(74) Vertreter: **Kreidler, Eva- Maria, Dr. rer. nat., Schönaicher Strasse 220, D-7030 Böblingen (DE)**

(56) Entgegenhaltungen: (Fortsetzung)
**TAKAHASHI et al.: "Grundlegende Untersuchungen über Aluminiumphosphatgläser von grosser chemischer Haltbarkeit und ihre Herstellung. Teil 1: Widerstandsfähigkeit von aluminiumhaltigen Gläsern gegenüber Flusssäure und Wasser", Seiten 155, 156
IBM TECHNICAL DISCLOSURE BULLETIN, Band 18, Heft 5, Oktober 1975, NEW YORK (US) J.M. BROWNLOW: "Dielectric glass compositions", Seite 1610
IBM TECHNICAL DISCLOSURE BULLETIN, Band 20, Heft 1,Juni 1977, NEW YORK (US) J.N. HUMENIKI: "Seal glass for ink jet nozzles", Seite 192
CHEMICAL ABSTRACTS, Band 83, Heft 1, 14. Juli 1975, Seite 296, Zusammenfassung 14925f, COLUMBUS, OHIO (US)**

**Beschreibung**

Die Erfindung betrifft eine gegen alkalische Tinten beständige Mehrfachdüsenanordnung für Tintenstrahldrucker, bei der eine Anzahl von aus Glas bestehenden Düsen in eine Glasmasse eingebettet ist.

Aus DE-C 26 54 157 und DE-A 28 33 144 sind Mehrfachdüsenanordnungen bekannt. Eine Mehrfachdüsenanordnung ist auch Gegenstand der vorliegenden Patentanmeldung. In den zuvorgenannten Schriften ist der Stand der Technik auf dem Gebiet der Tintenstrahldrucker ausführlich abgehandelt.

In Tintenstrahldruckern und/oder -schreibern wird die flüssige Tinte unter Druck einer Düse oder Düsen zugeführt, durch die ein extrem dünner, kontinuierlicher Tintenstrahl austritt. In Druckern dieser Art werden im allgemeinen aus Glas hergestellte Düsen verwendet.

Weil die Tinten, die in Tintenstrahldruckern verwendet werden, alkalisch (pH 10,5) reagieren können, muß das Glas, aus dem die Düsen bestehen und die entsprechenden abdichtenden Gläser, die zur Einbettung der Düsen verwendet werden, korrosionsbeständig sein. Es wurde auch gefunden, daß das einwandfreie Funktionieren von Druckern dieser Art sehr stark von der Art und Weise abhängt, in der die Düsen im Hinblick auf die sie umgebende Oberfläche in ein abdichtendes oder Lötglas eingekapselt oder eingebettet werden. Der Bereich in der Umgebung der Düsen darf keine Hohlräume und Blasen enthalten, um ein Aussickern oder Zerbrechen der Düse zu vermeiden, wenn diese in Form dünner Plättchen korrodierend wirkenden Tinten unter Druck ausgesetzt wird.

Zusätzlich müssen zur Vermeidung einer übermäßigen Beanspruchung und/oder des Zerbrechens irgendwelcher Elemente, insbesondere, wenn diese zur Verwendung in Tintenstrahldruckern in dünne Scheiben geschnitten, geschliffen und poliert werden, die thermischen Eigenschaften und die Ausdehnungscharakteristik der verwendeten Elemente genau berücksichtigt werden. Darüber hinaus muß die Einbettung oder Einkapselung so durchgeführt werden, daß die Düsengröße, die Form oder Ausrichtung nicht verändert wird.

In der DE-C 26 54 157 und in der DE-A 28 33 144 ist die Herstellung von Mehrfach-Tintenstrahl-Düsenanordnungen beschrieben und beansprucht, bei welcher aus keramischem Material oder Glas bestehende Blöcke zur Bildung von zwei Platten, vorzugsweise in Rechteckform, mit der erforderlichen Oberflächengüte und den gewünschten Abmessungen maschinell bearbeitet werden. Über die Länge einer Seite der ersten Platte wird eine einzige Nut hergestellt, und über die Breite der gleichen Seite und die Nut schneidend werden quer dazu verlaufende Kreuzschlitze, die tiefer als die Nut sind, hergestellt. Den Kreuzschlitzen in der ersten Platte entsprechende Schlitze werden über die Breite einer Seite der zweiten Platte hergestellt. Die Nut hält eine Anzahl von Glasröhrchen, die vor oder nach dem Zusammenfügen der beiden Platten eingebracht werden können. In jedem Schlitz ist ein Dichtungsmaterial, wie z.B. eine Glasfaser oder ein Glasfaden enthalten, das, nachdem die beiden Platten miteinander verbunden sind, eingebracht wird.

Die miteinander verbundenen Platten mit den Röhrchen und den Glasdichtungsfäden werden dann in aufrechter Stellung auf einem Träger unter Federvorspannung zusammengeklammert, und dann wird die gesamte Anordnung einer Temperatur ausgesetzt, die nur zum Schmelzen der Glasfäden ausreicht, die dann durch die Kapillarwirkung und die Schwerkraft durch die Nut fließen und damit eine vollständige Abdichtung der Röhrchen, insbesondere in dem Bereich der Kreuzschlitze herstellen. Nach Beendigung der Abdichtung werden die miteinander verbundenen Platten allmählich abgekühlt, und dann wird der Bereich zwischen den Schlitzen in dünne Düsenplättchen zerschnitten. Die Kreuzschlitze stellen sicher, daß die einzelnen, scheibenförmigen Abschnitte gleichförmig ausgefüllt sind, daß die Strecke, die das zur Dichtung verwendete Glas in Längsrichtung fließt und die Fläche der Sektionsschnitte verringert werden. Außerdem dienen die Kreuzschlitze zur Entlüftung und vermeiden damit den Lufteinschluß und Hohlräume. Sie können auch zum Einbringen eines Kühlmittels so nah als möglich an das Schneidwerkzeug und die Düsenscheiben verwendet werden. Nachdem eine Seite des geschnittenen Plättchens geläppt und poliert ist, kann es auf einer Stützplatte oder einer Trägerplatte unter Verwendung üblicher Verfahren, wie Verkleben mit Epoxidharz, Glasdichtungen oder durch Löten angebracht werden. Nach der Befestigung wird auch die Vorderseite des Plättchens geläppt und poliert. Das so auf der Trägerplatte befestigte Plättchen kann nunmehr an eine Quelle für eine unter hohem Druck stehende Flüssigkeit angeschlossen werden.

In der zuvor angegebenen DE-A 28 33 144 werden Tintenstrahl-Kapillardüsen mit verbesserten thermischen Ausdehnungskoeffizienten und Glühtemperaturen beschrieben, die hergestellt werden aus einer Glaszusammensetzung mit einem Gehalt, in Gew.%, an etwa 40 bis 60 % $SiO_2$, 12 bis 20 % $ZrO_2$, 12 bis 17 % $Na_2O$, 0 bis 2,3 % $K_2O$ und 0 bis 6 % $MgO$.

Diese Glaszusammensetzung für Tintenstrahl-Kapillardüsen wurde, um die Alkalibeständigkeit zu verbessern, modifiziert durch Einschluß von $BaO$, $CaO$, $Li_2O$, $Cu_2O$, $B_2O_3$ und/oder $Al_2O_3$ unter Erhalt von Glaszusammensetzungen mit einem Gehalt, in Gew.%, an 42 bis 52 % $SiO_2$, 8 bis 17 % $ZrO_2$, 6 bis 14 % $NaO$, 0 bis 2,3 % $K_2O$, 0 bis 6 % $MgO$, 0 bis 5 % $B_2O_3$, 4 bis 6 % $Al_2O_3$, 3 bis 22,3 % $BaO$, 6,7 bis 9,7 % $CaO$, 0 bis 2 % $Li_2O$ und 0 bis 7 % $Cu_2O$.

Aufgabe der vorliegenden Erfindung ist die Bereitstellung eines Glases zur Abdichtung oder Einkapselung von Düsen für Tintenstrahldrucker aus den zuvor beschriebenen Glaszusammensetzungen, das gegenüber stark alkalischen Tinten, die zum Tintenstrahldrucken verwendet werden, chemisch stabil ist; das die für den Einbau von Tintenstrahldüsen zu einer gewünschten Anordnung entsprechenden thermischen Eigenschaften aufweist und dessen thermischer Ausdehnungskoeffizient denen des Düsenglases angepaßt ist.

Die Aufgabe der Erfindung wird gelöst durch eine Mehrfachdüsenanordnung der eingangs genannten Art, die dadurch gekennzeichnet ist, daß die für die Einbettung der Düsen verwendete Glasmasse folgende Oxide, in Gew.%, enthält:

PbO 45 - 53,5 % GeO$_2$ 0 %
SiO$_2$ 15 - 24,5 % ZrO$_2$ 4,5 %
B$_2$O$_3$ 5 - 12 % MgO 0,5 - 1,5 %
ZnO 3,5 - 4,5 % BaO 0 - 1,5 %
Al$_2$O$_3$ 3 - 4 % TiO$_2$ 0 - 2 %
Na$_2$O 1 - 6,5 % CaO 0,5 - 1,5 %
CdO 2 - 3 % La$_2$O$_3$ 0 - 0,5 %
Cu$_2$O 0 - 2 %.

Die Glasmasse gemäß der Erfindung weist die zuvor verlangten Eigenschaften auf und erfüllt außerdem die Bedingungen, die an ein Glas zum Einbau von Tintenstrahldüsen in einen Tintenstrahldrucker gestellt werden und die nachfolgend noch einmal zusammengestellt sind.

Das Glas zum Abdichten oder Vereinigen von Glasdusen in einer Tintenstrahl-Druckvorrichtung muß eine Ausdehnung vergleichbar mit der des Düsenglases bei dem Erstarrungspunkt des abdichtenden Glases haben und muß bei einer Temperatur, die bei oder unter der Glühtemperatur (Ta) der Düsenglaszusammensetzung liegt, fließen. Wenn während des Abdichtens der Ta-Wert des Düsenglases wesentlich überschritten wird, deformieren sich die Düsen und werden unbrauchbar.

Im allgemeinen muß ein Glas zur Verwendung als Einbettungs- oder Einkapselungsmaterial für Tintenstrahl-Druckdüsen drei wesentliche Kriterien erfüllen. Erstens muß das Glas chemisch beständig gegenüber den stark alkalischen Tinten, die zum Strahldrucken verwendet werden sein. Zweitens muß das Glas thermische Eigenschaften aufweisen, die seine Verwendung zum Einbau oder zur Einkapselung von Glasdüsen zu der gewünschten Anordnung gestatten. Beispielsweise müssen die Gläser, die zum Abdichten verwendet werden, eine Erweichungstemperatur aufweisen, die deutlich unter der Deformationstemperatur jener Oberfläche liegt, auf die sie angewendet werden, so daß das abdichtende Glas fließen kann und diese Oberfläche bei einer Temperatur unterhalb derjenigen, bei der diese deformiert wird, benetzt. Auch müssen diese Gläser den bekannten Regeln der Anpassung thermischer Koeffizienten (beispielsweise des Ausdehnungskoeffizienten) folgen, damit das Eintreten thermischer Spannungen beim Abkühlen verhindert oder auf ein Minimum herabgesetzt wird.

Es wird allgemein angenommen, daß einer allgemeinen Regel entsprechend der thermische Ausdehnungskoeffizient eines abdichtenden Glases in dem Maße zunimmt, wie die Abdichtungs- oder Erweichungstemperatur (Ts) des Glases abnimmt. Demzufolge haben die meisten weichen Gläser, die bei relativ niedrigen Temperaturen zu fließen beginnen (beispielsweise 400°C), Koeffizienten größer 94 x 10$^{-7}$/°C. Diese Ausdehnungskoeffizienten sind zu hoch für einen zufriedenstellenden Einbau der Glasdüsen, die derzeit für Tintenstrahldrucker vorgesehen sind. Im allgemeinen ist für abdichtende Gläser ein Expansionskoeffizient ($\alpha$ bei 24 bis 300°C) von 54,6 bis 88,6 x 10$^{-7}$/°C, eine Glühtemperatur (Ta) von 415 bis 503°C und eine Erweichungstemperatur (Ts) von 484 bis 594°C erwünscht. Optimale Gläser für Abdichtungszwecke sollten folgende thermische Eigenschaften aufweisen: einen $\alpha$-Wert von 78 $\pm$ 3 x 10$^{-7}$/°C, Werte für Ts von 550 $\pm$ 30°C und für Ta von 450 $\pm$ 30°C. Schließlich müssen die Gläser für Abdichtungszwecke glasartiger Natur sein, so daß sie leicht zu Fasern, Stäben oder Röhrchen verarbeitet werden können.

Die Erfindung wird anhand von Ausführungsbeispielen in Verbindung mit den beigefügten Zeichnungen im einzelnen beschrieben.

In den Zeichnungen zeigt:

Fig. 1 eine Plattenanordnung bei der Herstellung einer Vielfach-Tintenstrahl-Düsenanordnung zur Erläuterung dieser Erfindung;

Fig. 2 eine Querschnittsansicht längs der Linie 2-2 der Fig. 1;

Fig. 3 eine weitere Verfahrensstufe bei der Herstellung einer Anzahl von Plättchen, die eine Mehrfach-Tintenstrahl-Düsenanordnung enthalten;

Fig. 4 ein Plättchen mit einer Mehrfach-Tintenstrahl-Düsenanordnung auf einer Trägerplatte für einen Tintenstrahldrucker;

Fig. 5 eine Querschnittsansicht längs der Linie 5-5 von Fig. 4.

Es wurde gefunden, daß bleireiche Bortrioxidgläser (z.B. C-223 in Tab. I), die zum Abdichten verwendet werden und im Handel für die Herstellung von Glasdüsenanordnungen für Tintenstrahldrucker erhältlich sind, eine sehr niedrige Korrosionsbeständigkeit gegenüber alkalischen Tintenlösungen aufweisen, die für Hochgeschwindigkeits-Druckverfahren, insbesondere in Verbindung mit den Düsenglaszusammensetzungen, die in der DE-A 28 33 144 beschrieben sind, verwendet werden. Diese im Handel erhältlichen Gläser für Abdichtungszwecke zersetzen sich in alkalischen Tintenlösungen, wenn sie diesen für eine relativ kurze Zeit (etwa 24 Stunden bei 60°C) ausgesetzt werden.

Es wurde gefunden, daß eine Passivierung der wieder aufgeschmolzenen Oberflächen der im Handel erhältlichen Gläser für Abdichtungszwecke mit dünnen Filmen aus TiO$_2$, SiO$_2$, ZrO$_2$ und Gold für das Glas nur einen unzureichenden Schutz gegen korrodierend wirkende Tinten darstellt, in erster Linie, weil die Materialien nicht vollständig ohne kleine Öffnungen abgeschieden werden können Die Tinte sickert durch diese Öffnungen und zersetzt das Glas. Dadurch werden Teilchen des chemisch instabilen Glases erhalten, welche die ständig zirkulierenden Tinten des Druckers bei ihrem Eintritt und Austritt aus den Öffnungen der Tintenstrahldüsen verunreinigen, d.h. das wieder aufgeschmolzene Glas für Abdichtungszwecke wird an diesen Stellen abgeschieden. Der Grad der Verunreinigung nimmt in dem Maße zu, wie die Erosion des Glases durch die Tinten fortschreitet. Es kann eintreten, daß die Düsen in der Strahlanordnung mit den Rückständen des abdichtenden Glases verstopft werden und aufhören, einwandfrei zu funktionieren. Im Hinblick auf diese schwerwiegenden Probleme sind bleireiche Bortrioxidgläser ungeeignet als abdichtendes Glas für Vielfach-Glasdüsenanordnungen, insbesondere bei Langzeitanwendungen.

In dieser Erfindung werden Glaszusammensetzungen für Abdichtungszwecke beschrieben, die eine hohe chemische Widerstandsfähigkeit und relativ niedrige Erweichungstemperaturen, Glühtemperaturen und passende Expansionskoeffizienten für Tintenstrahl-Düsenanordnungen aufweisen. Diese Gläser für Abdichtungszwecke sind nicht nur einmalig im Hinblick auf ihre hohe chemische Korrosionswiderstandsfähigkeit, sie weisen auch thermische Eigenschaften auf, die sie zum Abdichten oder Einbetten von Glasdüsen zu stabilen Anordnungen geeignet machen. Die chemischen Zusammensetzungen der Gläser für Abdichtungszwecke ergeben alkalibeständige Gläser, wie nachfolgend näher erläutert wird.

**Alkalibeständige abdichtende Gläser**

Bleiboratgläser für Abdichtungszwecke mit relativ niedrigen thermischen Eigenschaften (Ts, Ta und $\alpha$) sind nicht schwierig herzustellen, aber es ist schwierig, wenn nicht unmöglich, der Zusammensetzung dieser Glasmassen gute Korrosionsbeständigkeit zu verleihen, ohne im wesentlichen ihre thermischen Wiederaufschmelzeigenschaften zu erhöhen. In der nachfolgenden Tabelle I ist ein typisches Blei-Bortrioxidglas, C-223, beschrieben und verglichen mit einigen chemisch beständigen Gläsern für Abdichtungszwecke im Entwicklungsstadium im Hinblick auf ihre thermischen Eigenschaften, ihre chemische Zusammensetzung und chemische Widerstandsfähigkeit in einer alkalischen, elektrostatischen Tintenlösung von pH 10,5. Alle Gläser wurden etwa 24 Stunden lang der Tinte ausgesetzt, und der Grad der Korrosion wurde während des Tests dadurch beschleunigt, daß die Tintentemperatur von 25 auf 60°C erhöht wurde. Durch die Verwendung von kleinen Glasstäben wurde die Oberfläche, welche der Tinte ausgesetzt wurde, wesentlich vergrößert. Diese Stäbe wiesen einen Durchmesser von 1,0668 mm auf. Ein 24-Stundentest dieser Art entsprach einem 300-Stundentest, durchgeführt an der gleichen Glasmenge, die jedoch als eine Masse vorlag.

**Tabelle I**

Thermische Eigenschaften, Zusammensetzungen und Alkalibeständigkeit eines typischen blei-reichen Bortrioxidglases C-223 und Gläsern im Entwicklungsstadium

| Oxid. Gew.% | C-223 | S-271 | S-315 | S-318 | S-345 | S-409 | S-412 | S-418 |
|---|---|---|---|---|---|---|---|---|
| PbO | 58,0 | 45,0 | 45,0 | 45,0 | 45,0 | 50,0 | 51,0 | 53,5 |
| $SiO_2$ | 10,0 | 24,5 | 24,5 | 24,5 | 24,5 | 18,0 | 18,0 | 15,0 |
| $B_2O_3$ | 19,5 | 7,5 | 5,0 | 5,0 | 5,0 | 10,0 | 11,0 | 12,0 |
| $ZrO_2$ | | 4,5 | 4,5 | 4,5 | 4,5 | 4,5 | 4,5 | 4,5 |
| ZnO | 4,0 | 3,5 | 4,5 | 3,5 | 4,0 | 3,5 | 3,5 | 3,5 |
| $Na_2O$ | | 5,0 | 5,0 | 6,5 | 5,0 | 3,5 | 2,5 | 1,0 |
| BaO | | | 1,5 | 1,0 | 1,5 | 1,0 | 1,0 | 1,0 |
| CaO | | 1,5 | 1,0 | 1,0 | 0,5 | 0,5 | 0,5 | 0,5 |
| MgO | 2,5 | 1,5 | 1,0 | 1,0 | 1,0 | 0,5 | 0,5 | 0,5 |
| $Al_2O_3$ | 4,0 | 4,0 | 4,0 | 4,0 | 4,0 | 4,0 | 3,0 | 4,0 |
| CdO | | 3,0 | 2,5 | 2,0 | 2,5 | 2,0 | 2,0 | 2,0 |
| $TiO_2$ | | | 2,0 | 2,0 | 2,0 | 0,25 | 0,25 | 0,25 |
| CuO | 2,0 | | | | | | | |
| $La_2O_3$ | | | | | | 0,5 | 0,25 | 0,25 | 0,25 |
| $Cu_2O$ | | | | | | | 2,0 | 2,0 | 2,0 |
| $\alpha \times 10^{-7}/°C$ (24—300° C) | 69,0 | 80,0 | 71,3 | 88,6 | 81,3 | 80,7 | 76,0 | 69,5 |
| Ts, °C | 522 | 572 | 588 | 570 | 594 | 529 | 533 | 532 |
| Ta, °C | 434 | 454 | 462 | 448 | 468 | 418 | 422 | 431 |
| Gew.Verlust $(mg/cm^2)$* in alkalischer Tinte, pH = 10,5 | 10,28 | 0,412 | 0,212 | 0,223 | 0,144 | 0,404 | 0,837 | 0,573 |

* 24 Stunden beschleunigter Test bei 60° C

Obgleich ersichtlich ist, daß die thermischen Eigenschaften der chemisch beständigen "S"-Gläser etwas höhere Werte aufweisen als die des C-223-Glases zeigen die Ergebnisse, daß die meisten dieser Gläser im Hinblick auf die thermischen Eigenschaften gut mit den Düsengläsern (insbesondere A-192*), die in der zuvor angegebenen DE-A 28 33 144 angegeben sind, übereinstimmen, d.h. sie können ausreichend in einem Temperaturbereich von 700 bis 750°C aufgeschmolzen werden. Diese geeignete Aufschmelzbarkeit wird zurückgeführt auf den Gehalt an PbO und Na$_2$O in der Glaszusammensetzung für Abdichtungszwecke. Es ist bekannt, daß diese Oxide die Abnahme des Viskosität von Gläsern bewirken können.

Die Daten in Tabelle I zeigen auch die chemische Beständigkeit verschiedener Gläser gegenüber einer alkalischen Tintenlösung. Die Gewichtsverluste der Gläser für Abdichtungszwecke sind viel niedriger als die für das C-223-Glas in einer alkalischen Tinte mit einem pH-Wert von 10,5. Beispielsweise weist das S-345-Abdichtungsglas einen Gewichtsverlust auf, der 71 mal niedriger ist als der Gewichtsverlust für das C-223-Glas. Das S-315-Glas ist jedoch das bevorzugtere Glas

* Zusammensetzung A-192, Gew.%

SiO$_2$ 58,5 MgO 4,0
ZrO$_2$ 19,0 K$_2$O 2,0
Na$_2$O 16,0 As$_2$O$_3$ 0,5
Ts °C 863 Ta °C 673

Für den Gewichtsverlust in mg/cm$^2$ in einem beschleunigten Test - bei 70°C in einer alkalischen Tinte, siehe Fig. 9 der DE-A 28 33 144. für das Einsetzen von A-192-Glasdüsen in eine Düsenanordnung, weil es thermische Eigenschaften aufweist, die mit dem Düsenglas besser übereinstimmen, obgleich sein Gewichtsverlust nur 48 mal kleiner ist als der des C-223-Glases und nur 15 mal größer ist als der, den ein A-192-Düsenglas in einer alkalischen Tinte mit einem pH-Wert von 10,5 erleidet.

Es sei bemerkt, daß Proben des C-223-Glases sich nahezu vollständig in alkalischen Tintenlösungen (pH 10,5) in einem 24-Stundentest bei 60°C zersetzen.

Das Glas vom S-315-Typ weist verschiedene Eigenschaften auf, die es zum Abdichten und Einbetten von Glasdüsen in Düsenanordnungen zur Verwendung in Tintenstrahldruckern, in denen alkalische Tintenlösungen zum Drucken verwendet werden, am besten geeignet machen. Diese Eigenschaften schließen auch die Alkalibeständigkeit des abdichtenden Glases wie diejenige des Bleisilikatglases S-315 ein, welches besser ist als jedes andere Glas für Abdichtungszwecke, das zur Zeit bekannt ist.

Das Glas für Abdichtungszwecke S-315 kann auch leicht zu Fasern, Stäben oder Rohren gezogen werden, welche kristallisationsfrei sind, und die ohne das Stattfinden chemischer Reaktionen an den angrenzenden Oberflächen um die Glasdüsen herum aufgeschmolzen werden können. Auch weist ein Glas dieser Art thermische Eigenschaften auf, die mit denen der Düsengläser, beispielsweise mit einem A-192-Glas relativ übereinstimmen.

Darüber hinaus ist ein Glas, wie dasjenige des S-315-Typs, d.h. im wesentlichen ein Bleisilikatglas mit wesentlichen Beimengungen von ZrO$_2$, B$_2$O$_3$, CaO, MgO, Al$_2$O$_3$, TiO$_2$ und CdO zur Verbesserung der Alkalibeständigkeit wesentlich besser geeignet zur Herstellung hochalkalibeständiger Tintenstrahl-Düsenanordnungen als jede andere Abdichtungsglas/Düsenglasstruktur, die derzeit bekannt ist.

Zusammenfassend kann gesagt werden, daß in der DE-A 28 33 144 ausgezeichnet korrosionsbeständige Gläser (beispielsweise A-192, siehe Tabelle III und Fig. 9 dieser Offenlegungsschrift beschrieben sind, welche durch die abdichtenden Gläser gemäß dieser Erfindung ergänzt werden und die untereinander verträglich sind und sich zur Herstellung von Düsenanordnungen für das Tintenstrahldrucken eignen. Diese abdichtenden Gläser können zusätzlich zu ihren thermischen Eigenschaften um das Düsenglas herum aufgeschmolzen werden und ergeben eine Düsenanordnung für das Tintenstrahldrucken mit niedrigen Spannungen. Ihre chemische Widerstandsfähigkeit ist etwa 75 mal besser als die bisher verfügbarer bleireicher Bortrioxidgläser.

## Beschreibung der bevorzugten Ausführungsform

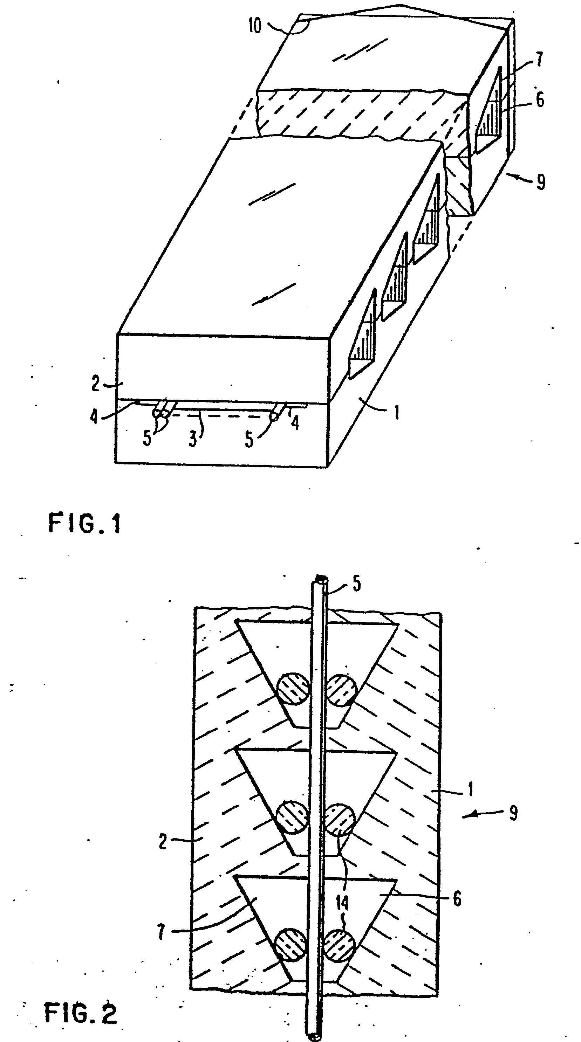

In Fig. 1 ist eine Plattenanordnung für die Herstellung von Vielfach-Düsenanordnungen gezeigt. Die Platten 1 und 2, die vorzugsweise aus dem gleichen Material bestehen (A-192-Glas oder keramisches Material) und von gleicher Oberflächenbeschaffenheit sind, werden maschinell in der Weise bearbeitet, daß auf einer Oberfläche parallele, tief eingeschnittene trapezförmige Schlitze 6 und 7 gebildet werden. In der Platte 1 werden ferner eine einzige breite Nut 3 und schmalere Nuten 4 hergestellt. Die Nut 3 muß so breit sein, daß eine Vielzahl von Kapillarglas-Düsenelementen oder Röhrchen 5 bündig nebeneinander über die gesamte Länge der Nutoberfläche gelegt werden können. Die Nut 3 kann auch an den Ecken leicht abgeschrägt sein oder an den Innenkanten unterschnitten sein. Die kleineren Nuten 4 müssen lediglich so geformt sein, daß zwischen den Platten ein erstes Glas zur Abdichtung fließen kann und dabei eine sichere Verbindung zwischen den Platten 1 und 2 herstellt. Die Nuten 8 dienen der Ausrichtung beim Zusammenfügen der Platten.

Fig. 1 zeigt die zu einer Plattenanordnung 9 zusammengefügten Platten 1 und 2. Man sieht, daß die Schlitze 6 und 7 durch einen in die Nut 8 eingelegten Draht 10 genau ausgerichtet sind. Der Draht besteht aus hitzebeständigem Material, wie z.B. Wolfram. Eine derartige Ausrichtung ist erforderlich, da der Bereich zwischen jedem benachbarten Paar von Schlitzen später zur Herstellung von Vielfach-Düsenplättchen herausgeschnitten wird. Zu diesem Zeitpunkt werden die Platten zwar zusammengefügt, aber noch nicht mit einer Dichtung versehen, und die Kapillarglasröhrchen 5 (aus A-192-Glas) liegen lose in der Nut 3.

Fig. 2 zeigt eine Plattenanordnung 9 in senkrechter Lage, wodurch der Schmelzfluß einer ersten Glasdichtung oder der Glasfaser 14 (d.h. S-315-Glas für alkalische Tintenanwendung) nach unten gestattet wird, wenn Anordnung und Unterlage in einen Ofen gebracht und erhitzt werden. Aus der Zeichnung ist ersichtlich, daß sich die Glasröhren über den unteren Teil der Vorrichtung hinaus erstrecken, um eine mögliche Verstopfung der Düsen zu verhindern, die durch eine Schmelze, welche aufgrund der Kapillarwirkung in den Röhren hochsteigt, verursacht wird.

Fig. 2 zeigt auch eine Teilschnittansicht längs der Linie 2-2 der in Fig. 1 gezeigten Anordnung 9. Man sieht, daß wegen der Trapezform der Schlitze zu beiden Seiten des Glasröhrchens 5 die Glasdichtung oder die Glasfaser 14 zu beiden Seiten dicht an dem Glasröhrchen anliegt und daher beim Schmelzen (bei etwa 700 bis 750° C) wegen der Kapillarwirkung und der Schwerkraft frei nach unten fließt, so daß der Glasbereich zwischen jedem obenliegenden Schlitz und jedem darunterliegenden Schlitz ohne Hohlräume und Blasen abgedichtet wird.

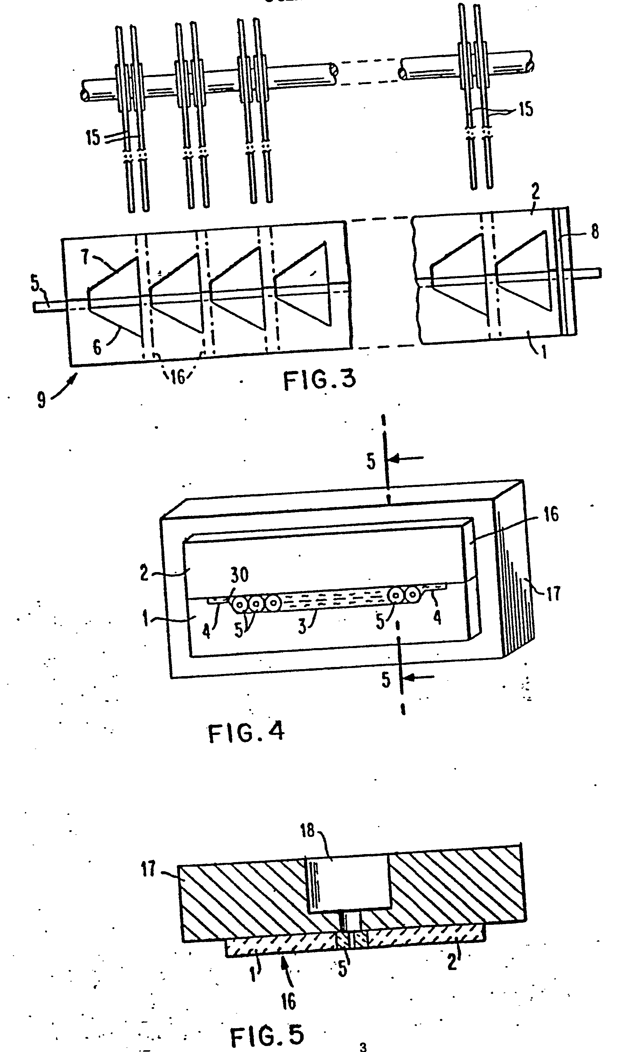

Fig. 3 zeigt eine Möglichkeit auf, wie die Plattenanordnung 9 nach der Abdichtung zerteilt werden kann, wobei eine Anzahl gleichförmiger Abstände voneinander aufweisender Sägeblätter 15 relativ zur Plattenanordnung 9 bewegt werden. Die Anordnung 9, die in einer Aufspannvorrichtung einer Gattersägmaschine befestigt ist, wird zum Zerschneiden oder Zersägen parallel zur Ebene der Sägeblätter zugeführt. Hier sind zwar rotierende Kreissägen gezeigt, es können jedoch auch in gleicher Weise hin- und hergehende Sägeblätter eingesetzt werden. Selbstverständlich können die Scheiben auch einzeln gesägt werden, doch wird hier ein gleichzeitiges Sägen der Scheiben 16 mit einer Gattersäge bevorzugt, da sich dadurch eine gleichmäßigere Dicke über die gesamte Länge der Scheibe ergibt. In der hier offenbarten Anordnung, die ein Teil der Erfindung ist, wird durch die quer verlaufenden Schlitze 6 und 7 die von der Säge zu durchtrennende Fläche verringert, während man gleichzeitig durch diese Schlitze 6 und 7 ein Kühlmittel so nahe wie möglich an die Sägeblätter oder Kreissägen und die Glasröhrchen heranführen kann. Dadurch kann man die Anordnung 9 zersägen, ohne dabei das Glasröhrchen oder die Glasdichtung zu beschädigen.

Fig. 4 zeigt eine typische Scheibe 16 mit der Glasschmelze oder -dichtung 30 in den Nuten 3 und 4, wodurch die Röhrchen völlig abgedichtet und fest zwischen den Platten angeordnet sind. Nach Abschneiden einer Scheibe wird deren Oberfläche mit höchster Genauigkeit geläppt und poliert, beispielsweise mit einer Vorrichtung, die im IBM Technical Bulletin, Dezember 1974, Band 17, Nr. 7, S. 2171 beschrieben ist. Nachdem eine Seite der Scheibe 16 in geeigneter Weise geläppt und poliert ist, wird sie, wie in Fig. 5 gezeigt ist, auf einer Stützplatte 17 befestigt und bildet damit den Kopf eines Tintenstrahldruckers. Die Stützplatte sollte dabei vorzugsweise aus dem gleichen Material bestehen wie die Scheibe, d.h. aus keramischem Material oder Glas, obgleich dies nicht zwingend vorgeschrieben ist. Die Befestigung kann durch Aufbringen eines dünnen Überzugs, eines Glaslötmittels oder eines Epoxidharzes auf mindestens dem Teil der Stützplatte durchgeführt werden, der die gleichen Abmessungen wie die Scheibe aufweist und rund um die Bohrung herum. Die auf der Stützplatte ordentlich ausgerichtete Scheibe wird dann erhitzt, wodurch das Glaslötmittel oder das Epoxidharz geschmolzen wird, das nach der Abkühlung die Scheibe fest mit der Stützplatte verbindet. Anschließend wird die Vorderseite der Scheibe geläppt und poliert.

Fig. 5 zeigt eine Teilschnittansicht der befestigten Scheibe 16 längs der Linie 5-5 in Fig. 4 bei richtiger Ausrichtung des Glasröhrchens 5 und der Bohrung 18 der Stützplatte 17. Die Bohrung in der Stützplatte im Anschluß an die Scheibe ist größer als die Bohrung des Glasröhrchens, jedoch kleiner als der Kreisdurchmesser des Röhrchens, so daß eine flüssigkeitsdichte Abdichtung erreicht wird und bei Zufuhr einer unter Druck stehenden Flüssigkeit zu der Platte kein Lecken der Flüssigkeit um das Röhrchen herum auftritt.

**Patentansprüche**

1. Gegen alkalische Tinte beständige Mehrfachdüsenanordnung für Tintenstrahldrucker, bei der eine Anzahl von aus Glas bestehenden Düsen in eine Glasmasse eingebettet ist,
dadurch gekennzeichnet,
daß die für die Einbettung der Düsen verwendete Glasmasse folgende Oxide, in Gew.%, enthält:
$PbO$ 45 - 53,5 % $GeO_2$ 0 %
$SiO_2$ 15 - 24,5 % $ZrO_2$ 4,5 %
$B_2O_3$ 5 - 12 % $MgO$ 0,5 - 1,5 %
$ZnO$ 3,5 - 4,5 % $BaO$ 0 - 1,5 %
$Al_2O_3$ 3 - 4 % $TiO_2$ 0 - 2 %
$Na_2O$ 1 - 6,5 % $CaO$ 0,5 - 1,5 %
$CdO$ 2 - 3 % $La_2O_3$ 0 - 0,5 %
$Cu_2O$ 0 - 2 %.

2. Mehrfachdüsenanordnung nach Anspruch 1,
dadurch gekennzeichnet,
daß die für die Einbettung der Düsen verwendete Glasmasse folgende Oxide, in Gew.%, enthält:
$PbO$ 45 % $BaO$ 1,5 %
$SiO_2$ 24,5 % $CaO$ 1 %

B$_2$O$_3$ 5 % MgO 1 %
ZrO$_2$ 4,5 % Al$_2$O$_3$ 4 %
ZnO 4,5 % CdO 2,5 %
Na$_2$O 5 % TiO$_2$ 2 %.

3. Mehrfachdüsenanordnung nach den Ansprüchen 1 und 2,
dadurch gekennzeichnet,
daß die für die Düsen verwendete Glasmasse folgende Oxide, in Gew.%, enthält:
SiO$_2$ 58,5 % MgO 4 %
ZrO$_2$ 19 % K$_2$O 2 %
Na$_2$O 16 % As$_2$O$_3$ 0,5 %.

4. Mehrfachdüsenanordnung nach Anspruch 3,
dadurch gekennzeichnet,
daß sie Glasdüsen aus einer Zusammensetzung gemäß Anspruch 3, eingebettet in gegen alkalische Tinten
beständige Glasmassen gemäß den Ansprüchen 1 und 2, enthält.


**Claims**

1. Alkaline ink-resistant multi-nozzle array for ink jet printers, where a number of glass nozzles are embedded in a glass substance,
characterized in that the glass mass used for embedding the nozzles comprises the following oxides, by weight %:
PbO 45 - 53,5 % GeO$_2$ 0 %
SiO$_2$ 15 -24,5 % ZrO$_2$ 4,5 %
B$_2$O$_3$ 5 - 12 % MgO 0,5 - 1,5 %
ZnO 3,5- 4,5 % BaO 0-1,5 %
Al$_2$O$_3$ 3 - 4 % TiO$_2$ 0 - 2 %
Na$_2$O 1- 6,5 % CaO 0,5 -1,5 %
CdO 2 - 3 % La$_2$O$_3$ 0 - 0,5 %
Cu$_2$O 0 - 2 %.

2. Multi-nozzle array as claimed in claim 1, characterized in that the glass mass used for embedding the nozzles comprises the following oxides, by weight %:
PbO 45 % BaO 1,5 %
SiO$_2$ 24,5 % CaO 1 %
B$_2$O$_3$ 5 % MgO 1 %
ZrO$_2$ 4,5 % Al$_2$O$_3$ 4 %
ZnO 4,5 % CdO 2,5 %
Na$_2$O 5 % TiO$_2$ 2 %.

3. Multi-nozzle array as claimed in claims 1 and 2,
characterized in that the glass mass used for the nozzles comprises the following oxides, by weight %:
SiO$_2$ 58,5 % MgO 4 %
ZrO$_2$ 19 % K$_2$O 2 %
Na$_2$O 16 % As$_2$O$_3$ 0,5 %.

4. Multi-nozzle array as claimed in claim 3, characterized in that it comprises glass nozzles in a composition in accordance with claim 3, embedded in alkaline-ink resistant glass mass of the composition in accordance with claims 1 and 2.


**Revendications**

1. Ensemble de buses multiples résistant à des encres alcalines, utilisable dans des imprimantes à jets d'encre et dans lequel un certain nombre de buses se composant de verre sont scellées dans une masse de verre, caractérisé en ce que la masse de verre utilisé pour le scellement des buses contient les pourcentages en poids d'oxydes suivants:
PbO 45 - 53,5 % GeO$_2$ 0 %
SiO$_2$ 15 - 24,5 % ZrO$_2$ 4,5 %
B$_2$O$_3$ 5 - 12 % MgO 0,5 - 1,5 %
ZnO 3,5 - 4,5 % BaO 0 - 1,5 %
Al$_2$O$_3$ 3 - 4 % TiO$_2$ 0 - 2 %
Na$_2$O 1 - 6,5 % CaO 0,5 - 1,5 %
CdO 2 - 3 % La$_2$O$_3$ 0 - 0,5 %
Cu$_2$O 0 - 2 %.

2. Ensemble de buses multiples selon la revendication 1, caractérisé en ce que la masse de verre utilisé pour le scellement des buses contient les pourcentages en poids d'oxydes suivants:

PbO 45 % BaO 1,5 %
$SiO_2$ 24,5 % CaO 1 %
$B_2O_3$ 5 % MgO 1%
$ZrO_2$ 4,5 % $Al_2O_3$ 4%
ZnO 4,5 % CdO 2,5 %
$Na_2O$ 5 % $TiO_2$ 2%

3. Ensemble de buses multiples selon les revendications 1 et 2, caractérisé en ce que la masse de verre utilisé pour les buses contient les pourcentages en poids d'oxydes suivants:

$SiO_2$ 58,5 % MgO 4 %
$ZrO_2$ 19 % $K_2O$ 2 %
$Na_2O$ 16 % $As_2O_3$ 0,5 %

4. Ensemble de buses multiples selon la revendication 3, caractérisé en ce qu'il comporte des buses en verre ayant une composition conforme à la revendication 3, scellées dans des masses de verre résistant à des encres alcalines conformément aux revendications 1 et 2.

FIG.1

FIG.2

FIG.3

FIG.4

FIG.5